# EUROPÄISCHE PATENTANMELDUNG

(11) **EP 2 468 595 A1**
(43) Veröffentlichungstag der Anmeldung: **27.06.2012**
(21) Anmeldenummer: 11186128.2
(22) Anmeldetag: 21.10.2011
(51) Int. Cl.: B60T 13/68, B60T 8/36, H01R 13/24

(54) **Vorrichtung zur elektrischen Kontaktierung von Elektronikeinheiten**

(30) Priorität: 21.12.2010 DE 102010063709
(71) Anmelder: Robert Bosch GmbH, 70442 Stuttgart (DE)
(72) Erfinder: Pfleger, Christian, 87527 Sonthofen (DE); Wagner, Guenter, 91580 Petersaurach (DE)

(57) **Zusammenfassung**

Die Erfindung betrifft eine Vorrichtung zur elektrischen Kontaktierung einer ersten Elektronikeinheit (10) mit einer zweiten Elektronikeinheit (12) umfassend eine Führungseinheit (14), zumindest eine in der Führungseinheit (14) geführte erste Kontakteinheit (16) und eine zweite Kontakteinheit (18, 18'), wobei die Kontakteinheiten (16, 18, 18') zur elektrischen Kontaktierung jeweils mindestens ein Kontaktelement (16.1, 16.2, 18.1, 18.1', 18.2) umfassen, die als Kontaktpartner zusammenwirken. Erfindungsgemäß sind die Kontaktelemente (16.1, 16.2, 18.1, 18.1', 18.2) derart ausgestaltet sind, dass die elektrische Kontaktierung an mindestens zwei Kontaktstellen (20.1a, 20.1a', 20.1b, 20.1b', 20.2a, 20.2b) entsteht.

## Beschreibung

### Stand der Technik

Die Erfindung geht aus von einer Vorrichtung zur elektrischen Kontaktierung einer ersten Elektronikeinheit mit einer zweiten Elektronikeinheit nach der Gattung des unabhängigen Patentanspruchs 1.

Vorrichtungen zur elektrischen Kontaktierung von elektronischen Bauteilen sind aus dem Stand der Technik in unterschiedlichen Ausgestaltungen bekannt. Damit der elektrische Kontakt zwischen den elektronischen Bauteilen zuverlässig und sicher hergestellt wird, werden üblicherweise in Einpunkt-Druck-Kontaktsystemen Kontaktpartner verwendet, deren Kontaktelemente ebene Kontaktflächen aufweisen. Bei der Kontaktierung der Kontaktflächen der beiden Kontaktpartner besteht jedoch die Gefahr eines seitlichen Abwanderns eines Kontaktelements von dem ursprünglichen Kontaktpunkt durch Querkräfte, da keine externe Führung der Kontaktelemente besteht. Obendrein verhindern anhaftende Verunreinigungen an den Kontaktflächen der beiden Kontaktpartner eine sichere Energieübertragung und Signalübertragung.

Aus der DE 199 17 941 A1 ist eine Sensorbaugruppe eines Bremsgeräts bekannt, bei welcher über eine derartige Vorrichtung zur Kontaktierung der elektrische Kontakt zwischen einer ersten als Drucksensor ausgeführten Elektronikeinheit mit einer zweiten als Steuerelektronik ausgeführten Elektronikeinheit hergestellt wird. Bei dem beschriebenen Bremsgerät wird eine Steuerelektronik zur Vereinfachung der Montage in einem über mindestens einen Drucksensor gestülpten Gehäuse untergebracht und die elektrische Verbindung zwischen der Steuerelektronik und dem Drucksensor wird bei der Montage über eine erste Kontakteinheit mit vier als Federkontaktstifte ausgeführten Kontaktelementen und eine zweite Kontakteinheit mit vier als Kontaktflächen ausgeführten Kontaktelementen selbsttätig hergestellt. Das Gehäuse der Steuerelektronik wird dabei auf einem Hydraulikblock des Bremsgerätes befestigt, in das der mindestens eine Drucksensor eingesetzt ist, so dass sich die Federkontaktstifte der ersten Kontakteinheit endseitig mit einem definierten Anlagedruck zwischen den einander gegenüberliegenden Kontaktflächen der zweiten Kontakteinheit abstützen. Hierbei sind die Federkontaktstifte der ersten Kontakteinheit in Führungseinheiten geführt, die sich in einem Isolierstück befinden, wobei die Federkontaktstifte jeweils eine Kontakthülse mit einliegender Kontaktfeder und mindestens einen in der Kontakthülse axial verschiebbaren Kontaktstößel aufweisen, der von der als Druckfeder ausgebildeten Kontaktfeder in Ausschiebrichtung aus der Kontakthülse beaufschlagt ist. Zwischen Kontakthülse und Kontaktstößel ist eine axiale Abstützung vorgesehen, durch welche der Kontaktstößel in seiner Kontakthülse gehalten ist. Diese Abstützung besteht aus einer umgebördelten Randzone am Ende der Kontakthülse, an der eine kolbenartige Verdickung des stufig abgesetzten Kontaktstößels aufläuft. Bei einigen Ausführungsformen der bekannten Federkontaktstifte werden beide Endbereiche von einem Kontaktstößel gebildet, wobei die Kontaktstößel aus entgegengesetzten Richtungen in ihre den Mittelbereich des Federkontaktstiftes bildende Kontakthülse eingreifen. Zwischen den verdickten Enden der beiden Kontaktstößel ist die in der Kontakthülse geführte Schraubendruckfeder abgestützt und drückt die Kontaktstößel bei nicht eingebautem Federkontaktstift in ihre maximal aus der Kontakthülse ausgeschobene Endlage. Somit bildet der Federkontaktstift aus Kontakthülse, Kontaktstößeln und Kontaktfeder bereits im nicht eingebauten Zustand eine stabil vormontierte und somit leicht handhabbare Baugruppe. Die Komponenten des Federkontaktstiftes müssen jedoch sehr maßhaltig gefertigt sein, um eine dauerhaft problemlose elektrische Kontaktierung sicherstellen zu können. Dies gilt in besonderem Maße, wenn die Baugruppe insgesamt filigran gestaltet ist. Dadurch ist die Herstellung der Vormontagebaugruppe aus Kontakthülse, Kontaktfeder und Kontaktstößeln insgesamt technisch aufwändig und bereits der einzelne Federkontaktstift aus Präzisionsbauteilen ist relativ teuer.

### Offenbarung der Erfindung

Die erfindungsgemäße Vorrichtung zur elektrischen Kontaktierung von Elektronikeinheiten mit den Merkmalen des unabhängigen Patentanspruchs 1 hat demgegenüber den Vorteil, dass die Kontaktelemente der beiden Kontakteinheiten derart ausgestaltet sind, dass die elektrische Kontaktierung an mindestens zwei Kontaktstellen entsteht. In vorteilhafter Weise müssen die erfindungsgemäßen Kontaktpartner nicht zwingend maßhaltig gefertigt bzw. montiert sein, um eine dauerhaft problemlose elektrische Kontaktierung sicherzustellen. Ferner gewährleistet die erfindungsgemäße Kontaktiervorrichtung eine sichere Übertragung der Energie und Signale zwischen den Kontaktpartnern, auch bei nicht idealen Reinheitsbedingungen, wenn beispielsweise Schmutz die Kontaktstellen verunreinigt. Ebenfalls gewährleistet die erfindungsgemäße Kontaktiervorrichtung eine kontinuierlich gute Übertragung der elektrischen Signale in einem Temperaturbereich von -40°C bis 120°C. Ferner ist die erfindungsgemäße Kontaktiervorrichtung derart gestaltet, dass die Kontaktelemente während des Betriebs definiert zueinander geführt sind und dadurch ein seitliches Abwandern der Kontaktelemente auch bei Toleranzabweichungen ausgeschlossen ist. Idealerweise sind die Kontaktelemente der ersten Kontakteinheit auf Grund der konstruktiven Ausführung sowohl gegen Querkräfte als auch gegen Längskräfte beständig, da die Kontaktelemente der ersten Kontakteinheit sowohl eine Unterstützung quer als auch längs zu ihrer Bewegungsrichtung auf Grund ihrer seitlichen Führung durch die Kontaktelemente der zweiten Kontakteinheit erfahren. Diese Unterstützung erfolgt selbst bei kleinen Bauraumbedingungen, da ein Ineinandergreifen der erfindungsgemäßen Kontaktelemente der beiden Kontakteinheiten bereits am Anfang der Kontaktbewegung stattfinden kann. Dadurch ist bereits am Anfang des Kontaktierungsvorgangs ein hohe mechanische Flexibilität und eine hohe Sicherheit der elektrischen Kontaktierung gegeben. Auf Grund der idealen mechanischen Eigenschaften im Kontaktbereich ist der Verschleiß in diesem Bereich in vorteilhafter Weise vernachlässigbar klein. Zudem weist die Vorrichtung zur elektrischen Kontaktierung auf Grund der guten Temperaturbeständigkeit in vorteilhafter Weise eine hohe Standzeit bzw. Lebensdauer auf.

Durch die in den abhängigen Ansprüchen aufgeführten Maßnahmen und Weiterbildungen sind vorteilhafte Verbesserungen der im unabhängigen Patentanspruch 1 angegebenen Vorrichtung zur Kontaktierung möglich.

In vorteilhafter Ausgestaltung der Erfindung sind die Kontaktstellen punktförmig und/oder linienförmig und/oder flächig ausgeführt. Auf Grund der erfindungsgemäßen Ausführung der Kontaktelemente findet zwischen den Kontaktpartnern an mehreren Punkten, Linien und/oder Flächen eine sichere Übertragung der Energie und Signale statt, sogar bei verschmutzten Oberflächen der Kontaktelemente. Durch diese konstruktiv vorgegebene Mehrfachkontaktierung funktionieren die Elektronikeinheiten stets zuverlässig und störungsfrei.

In weiterer vorteilhafter Ausgestaltung der erfindungsgemäßen Kontaktiervorrichtung erfolgt die elektrische Kontaktierung der Kontaktelemente in Form einer Steckverbindung, wobei das Kontaktelement der zweiten Kontakteinheit eine sich verjüngende Ausnehmung aufweist, in welcher ein sich verjüngender Endbereich des Kontaktelements der ersten Kontakteinheit aufnehmbar ist. Dies hat den Vorteil, dass die beiden Kontaktelemente zwei zueinander parallele Mantelflächen aufweisen, die nach erfolgter Kontaktierung an mehreren Kontaktstellen aufeinander aufliegen bzw. eine formschlüssige Verbindung bilden. Durch die verjüngende Ausnehmung der zweiten Kontakteinheit und durch den verjüngenden Endbereich des Kontaktelements der ersten Kontakteinheit erfolgt nicht nur eine sichere Mehrfachkontaktierung mit sicherer Übertragung der Energie und Signale an der Mantelfläche sondern es kann auch zusätzlich eine Kontaktierung der Stirnseite der ersten Kontakteinheit mit der zweiten Kontakteinheit erfolgen. Auch wenn die Mantelflächen der beiden Kontaktelemente auf Grund unterschiedlicher Durchmesser oder Winkel nicht genau parallel zueinander sind und dadurch eine Kontaktierung der Stirnseite der ersten Kontakteinheit mit der zweiten Kontakteinheit nicht erfolgen kann, ist dennoch über die Mantelflächen der beiden Kontaktelemente eine ausreichende Mehrfachkontaktierung gewährleistet.

In weiterer vorteilhafter Ausgestaltung der erfindungsgemäßen Kontaktiervorrichtung ist in der zweiten Kontakteinheit eine der sich verjüngenden Ausnehmung in Richtung der Hochachse gegenüberliegende zweite sich verjüngende Ausnehmung zur Aufnahme eines Endbereiches eines Kontaktelementes der zweiten Elektronikeinheit oder einer weiteren Elektronikeinheit vorgesehen. Hierdurch ist auf eine einfache und kostengünstige Weise der Anschluss einer weiteren Elektronikeinheit oder einer Signalschnittstelle unter Verwendung nur eines Kontaktelementes möglich, das bauraumsparend integriert werden kann und dennoch die Vorteile einer sicheren Übertragung der Energie und Signale gewährleistet.

Besonders vorteilhaft ist, dass die sich in Richtung einer Hochachse erstreckende Tiefe der Ausnehmung des Kontaktelements im Wesentlichen der sich in Richtung einer Hochachse erstreckenden Länge des sich verjüngenden Endbereichs des Kontaktelements entspricht. Dadurch ist in vorteilhafter Weise über die ganze gemeinsame Fläche der beiden Kontaktelemente eine formschlüssige Kontaktierung der Kontaktelemente möglich. Zusätzlich wird durch die Führung der beiden Kontaktelemente zueinander ein seitliches Abwandern der Kontaktelemente weg vom ursprünglichen Kontaktpunkt verhindert, da eventuell auftretende und auf die Kontaktelemente einwirkende Querkräfte durch die Führung kompensiert werden.

In weiterer Ausgestaltung der Erfindung weist die sich verjüngende Ausnehmung eine plane Kontaktgrundfläche und eine sich an die Kontaktgrundfläche anschließende Kontaktmantelfläche auf. In vorteilhafter Weise ist das Kontaktelement einfach und preisgünstig herstellbar und bietet auf Grund seiner Geometrie mit einer verjüngenden Ausnehmung im Gegensatz zu einer planen Kontaktfläche eine wesentlich größere Anlagefläche für einen Kontaktpartner. Dadurch ist eine sichere Mehrfachkontaktierung gewährleistet und die Wahrscheinlichkeit einer sicheren Übertragung der Energie und Signale der Kontaktpartner deutlich erhöht, selbst wenn ein Teil der Kontaktfläche der Kontaktelemente verunreinigt ist.

In weiterer Ausgestaltung der Erfindung sind der sich verjüngende Endbereich des Kontaktelements der ersten Kontakteinheit und die sich verjüngende Ausnehmung des Kontaktelements der zweiten Kontakteinheit kegelstumpfförmig ausgeführt. Vorzugsweise sind die korrespondierende Anlageflächen der beiden Kontaktelemente in ihren jeweiligen kontaktaufnehmenden Bereichen kegelstumpfförmig ausgeführt. Alternativ können die korrespondierenden Anlageflächen jedoch auch kegelförmig, pyramidenförmig, trichterförmig ausgeführt werden. Zudem sind auch andere einem Fachmann als sinnvoll erscheinende geometrische Formen der Anlageflächen denkbar. Die kegelstumpfförmige Ausführung ist besonders günstig für beide Kontaktelemente, da diese kostengünstig und einfach herstellbar ist und beim Einbau der Kontaktiervorrichtung keine Montagefehler möglich sind.

In weiterer vorteilhafter Ausgestaltung der erfindungsgemäßen Kontaktiervorrichtung ist das Kontaktelement der ersten Kontakteinheit als Feder, Stift oder Hülse ausgeführt. Für die erfindungsgemäße Kontaktiervorrichtung können unterschiedliche Ausführungsformen der Kontaktelemente kostengünstig als Massenteile hergestellt und mit gleich guten Eigenschaften bezüglich Stromtragfähigkeit montiert werden. Im vorliegenden Ausführungsbeispiel wird jedoch als Kontaktelement eine kostengünstige Feder verwendet, die in ihren Endbereichen zur axialen Versteifung auf Block gewickelt und schnell sowie einfach montierbar ist. Zur Verbesserung der Stromtragfähigkeit kann auf die beiden Enden der Feder ein Stift oder eine Hülse aufgesetzt sein oder das Kontaktelement kann auch aus anderen einem Fachmann als sinnvoll erscheinenden Kombinationen der drei Komponenten Feder, Stift oder Hülse ausgeführt sein.

Eine bevorzugte Realisierung der erfindungsgemäßen Kontaktiervorrichtung ist eine Ausführung als Druckkontaktsystem. In vorteilhafter Weise gewährleistet die erfindungsgemäße Kontaktiervorrichtung bei besonders engen Platzverhältnissen als auch bei verschmutzten Kontaktflächen der Kontaktelemente bauraumsparend sicher geschlossene elektrische Kontakte und damit eine sichere und zuverlässige Übertragung der Energie und Signale.

Vorteilhafte Ausführungsformen der Erfindung sind in den Zeichnungen dargestellt und werden nachfolgend beschrieben. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische perspektivische Schnittdarstellung eines ersten Ausführungsbeispiels einer erfindungsgemäßen Vorrichtung zur elektrischen Kontaktierung von Elektronikeinheiten, die eine erste Kontakteinheit und eine zweite Kontakteinheit umfasst, welche jeweils Kontaktelemente aufweisen, die als Kontaktpartner zusammenwirken.
Fig. 2 zeigt eine schematische Darstellung eines Ausführungsbeispiels eines Kontaktelement s der ersten Kontakteinheit und eines Ausführungsbeispiels eines Kontaktelements der zweiten Kontakteinheit.
Fig. 3 zeigt eine schematische Darstellung des Ausführungsbeispiels des Kontaktelements aus Fig. 1 und eines zweiten Ausführungsbeispiels eines Kontaktelements der zweiten Kontakteinheit.

### Ausführungsformen der Erfindung

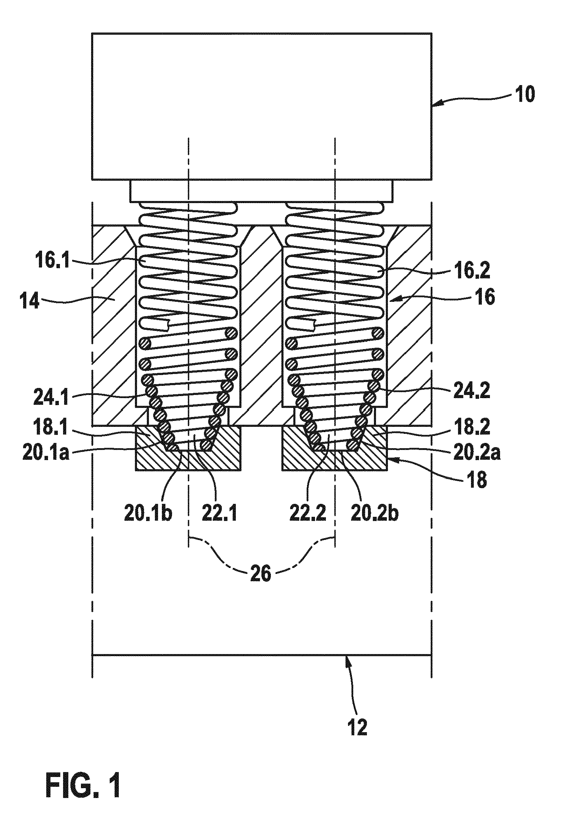

Fig. 1 zeigt eine erfindungsgemäße Vorrichtung zur elektrischen Kontaktierung einer ersten Elektronikeinheit 10 mit einer zweiten Elektronikeinheit 12. Derartige Elektronikeinheiten 10, 12 finden ihre Anwendung beispielsweise in Kontaktsystemen für Sicherheitstechnologien in einem Fahrzeug, wie beispielsweise einem Anti-Blockier-System (ABS), einem elektronischen Stabilisierungsprogramm (ESP), einer elektrohydraulischen Bremse (EHB), einem Traction Control System (TCS) oder einer Antischlupfregelung (ASR). In den vorliegenden Ausführungsbeispielen handelt es sich um eine Vorrichtung zur Kontaktierung eines Kontaktsystems für ein elektronisches Stabilisierungsprogramm (ESP) in einem Fahrzeug, wobei die erste Elektronikeinheit 10 eine als Steuergerät ausgeführte Steuerelektronikeinheit des Fahrzeugs und die zweite Elektronikeinheit 12 eine Drucksensoreinheit des ESP-Systems umfasst.

Wie aus Fig. 1 bis 3 ersichtlich ist, umfasst die Vorrichtung zur elektrischen Kontaktierung der ersten Elektronikeinheit 10 mit der zweiten Elektronikeinheit 12 eine Führungseinheit 14, zumindest eine in der Führungseinheit 14 geführte erste Kontakteinheit 16 und mindestens eine zweite Kontakteinheit 18, 18'. Die Kontakteinheiten 16, 18, 18' umfassen zur Kontaktierung jeweils mindestens ein Kontaktelement 16.1, 16.2, 18.1, 18.1', 18.2, die als Kontaktpartner zusammenwirken, wobei die Kontakteinheiten 16, 18 im vorliegenden Ausführungsbeispiel gemäß Fig. 1 jeweils zwei Kontaktelemente 16.1, 16.2, 18.1, 18.2 aufweisen.

Um eine sichere Übertragung der Energie und Signale zwischen den Kontaktpartnern, auch bei nicht idealen Reinheitsbedingungen zu gewährleistensind die Kontaktelemente 16.1, 16.2, 18.1, 18.1 18.2 derart ausgestaltet, dass eine Kontaktierung an mindestens zwei Kontaktstellen 20.1a, 20.1a', 20.1b, 20.1b', 20.2a, 20.2b entsteht, wobei die Kontaktstellen 20.1 a, 20.1a', 20.1b, 20.1b', 20.2a, 20.2b punktförmig und/oder linienförmig und/oder flächig ausgeführt sind. Nicht ideale Randbedingungen sind beispielsweise gegeben, wenn Schmutz die Kontaktstellen verunreinigt.

Das erste Kontaktelement 16.1, 16.2 der ersten Kontakteinheit 16 kann bevorzugt als Feder, Stift oder Hülse ausgeführt sein. Um die Kontaktiervorrichtung vorzugsweise als Druckkontaktsystem auszuführen, ist das Kontaktelement 16.1, 16.2 im vorliegenden Ausführungsbeispiel als Feder 16.1, 16.2 ausgeführt, die zur Herstellung des elektrischen Kontakts eingesetzt wird. Hierfür ist die Feder 16.1, 16.2 als Schraubendruckfeder ausgeführt, deren Endbereiche 24.1, 24.2 zur axialen Versteifung auf Block gewickelt und somit druckversteift ausgeführt sind.

Die elektrische Kontaktierung der Kontaktelemente 16.1,16.2,18.1,18.1',18.2 erfolgt gemäß Fig. 1 bis 3 in Form einer Steckverbindung. Hierzu weist das Kontaktelement 18.1, 18.1', 18.2 der zweiten Kontakteinheit 18, 18' eine sich verjüngende Ausnehmung 22.1, 22.1', 22.2 auf, in welcher der sich ebenfalls verjüngende Endbereich 24.1, 24.2 des Kontaktelements 16.1, 16.2 der ersten Kontakteinheit 16 aufnehmbar ist. Die sich verjüngende Ausnehmung 22.1, 22.1 ', 22.2, 28' weist eine plane Kontaktgrundfläche 20.1b, 20.1b', 20.2b und eine sich an die Kontaktgrundfläche 20.1b, 20.1b', 20.2b anschließende Kontaktmantelfläche 20.1a, 20.1a', 20.2a auf. In den vorliegenden Ausführungsbeispielen ist der Grundkörper des Kontaktelements bzw. sind die Grundkörper der Kontaktelemente 18.1, 18.1', 18.2 der zweiten Kontakteinheit 18, 18' als flaches zylindrisches Bauteil ausgebildet.

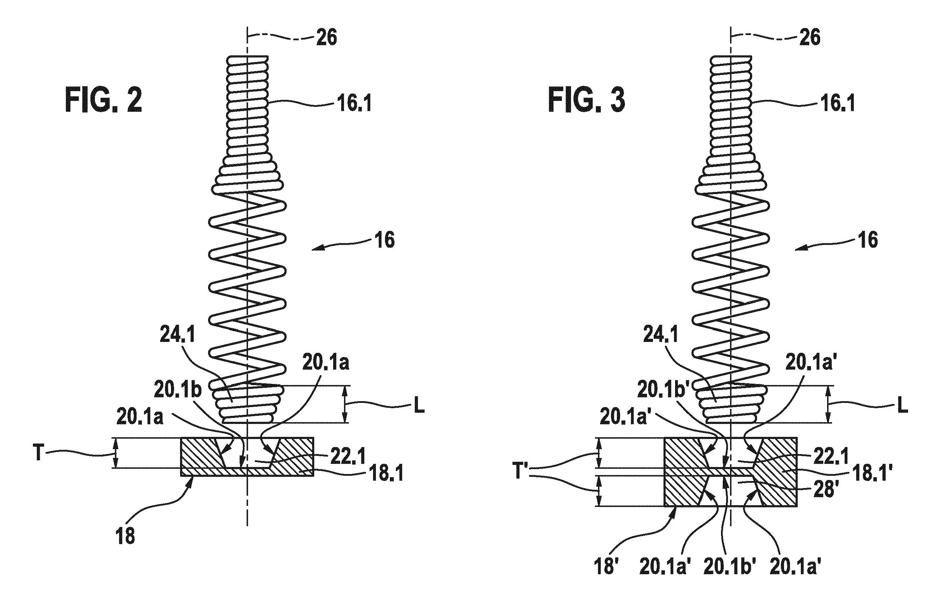

Wie aus den Fig. 2 und 3 ersichtlich, entspricht die sich in Richtung einer Hochachse 26 erstreckende Tiefe T, T' der Ausnehmung 22.1, 22.1', 22.2, 28' des Kontaktelements 18.1, 18.1', 18.2 im Wesentlichen der sich in Richtung einer Hochachse 26 erstreckenden Länge L des sich verjüngenden Endbereichs 24.1, 24.2 des Kontaktelements 16.1, 16.2. Somit entsteht während des Kontaktiervorgangs eine gänzliche Überdeckung der Tiefe T, T' der Ausnehmung 22.1, 22.1', 22.2, 28' des Kontaktelements 18.1, 18.1 18.2 mit der Länge L des sich verjüngenden Endbereichs 24.1, 24.2 des Kontaktelements 16.1 und 16.2, wodurch die elektrische Kontaktierung der Kontaktiervorrichtung gesichert wird.

In einer zweiten Ausführungsform der erfindungsgemäßen Kontaktiervorrichtung gemäß Fig. 3 ist in der zweiten Kontakteinheit 18' eine der sich verjüngenden Ausnehmung 22.1' in Richtung der Hochachse 26 gegenüberliegende zweite sich verjüngende Ausnehmung 28' zur Aufnahme eines Endbereiches eines hier nicht dargestellten Kontaktelementes der zweiten Elektronikeinheit 12 oder einer hier nicht dargestellten weiteren Elektronikeinheit vorgesehen. Der Grundkörper der zweiten Ausführungsform des zweiten Kontaktelements 18.1' der zweiten Kontakteinheit 18' ist ebenfalls als flaches zylindrisches Bauteil ausgebildet, das auf beiden Seiten eine sich verjüngende Ausnehmung 22.1', 28' aufweist, mit einer planen Kontaktgrundfläche 20.1b' und einer sich an die Kontaktgrundfläche 20.1b' anschließenden Kontaktmantelfläche 20.1a'. Somit kann bei der zweiten Ausführungsform des Kontaktelements 18.1' das Kontaktelement 18.1' beidseitig von Kontaktelementen 16.1, 16.2 kontaktiert werden. Der Kontaktiervorgang der Kontakteinheiten 16, 18' erfolgt wie bereits beschrieben.

Der sich verjüngende Endbereich 24.1, 24.2 des Kontaktelements 16.1, 16.2 der ersten Kontakteinheit 16 und die sich verjüngende Ausnehmung 22.1, 22.1', 22.2, 28' des Kontaktelements 18.1, 18.1', 18.2 der zweiten Kontakteinheit 18, 18' sind im dargestellten Ausführungsbeispiel vorzugsweise kegelstumpfförmig ausgeführt. Wie bereits erwähnt, erfolgt die elektrische Kontaktierung der Kontaktelemente 16.1, 16.2, 18.1, 18.1', 18.2 in Form einer Steckverbindung, wobei das Kontaktelement 18.1, 18.1', 18.2 der zweiten Kontakteinheit 18, 18' eine sich verjüngende Ausnehmung 22.1, 22.1', 22.2, 28' aufweist, in welcher ein sich verjüngender Endbereich 24.1, 24.2 des Kontaktelements 16.1, 16.2 der ersten Kontakteinheit 16 aufnehmbar ist. Die Kontaktelemente 16.1,16.2,18.1,18.1',18.2 sind derart ausgestaltet, dass die elektrische Kontaktierung an mindestens zwei Kontaktstellen 20.1 a, 20.1a', 20.1b, 20.1b', 20.2a, 20.2b entsteht, wobei die Kontaktstellen 20.1a, 20.1a', 20.1b, 20.1b', 20.2a, 20.2b punktförmig und/oder linienförmig und/oder flächig ausgeführt sind.

## Patentansprüche

1. Vorrichtung zur elektrischen Kontaktierung einer ersten Elektronikeinheit (10) mit einer zweiten Elektronikeinheit (12) umfassend eine Führungseinheit (14), zumindest eine in der Führungseinheit (14) geführte erste Kontakteinheit (16) und eine zweite Kontakteinheit (18, 18'), wobei die Kontakteinheiten (16, 18, 18') zur elektrischen Kontaktierung jeweils mindestens ein Kontaktelement (16.1, 16.2, 18.1, 18.1', 18.2) umfassen, die als Kontaktpartner zusammenwirken, **dadurch gekennzeichnet, dass** die Kontaktelemente (16.1, 16.2, 18.1, 18.1', 18.2) derart ausgestaltet sind, dass die elektrische Kontaktierung an mindestens zwei Kontaktstellen (20.1 a, 20.1a', 20.1b, 20.1b', 20.2a, 20.2b) entsteht.

2. Kontaktiervorrichtung nach Anspruch 1, **dadurch gekennzeichnet, dass** die Kontaktstellen (20.1a, 20.1a', 20.1b, 20.1b', 20.2a, 20.2b) punktförmig und/oder linienförmig und/oder flächig ausgeführt sind.

3. Kontaktiervorrichtung nach Anspruch 1 oder 2, **dadurch gekennzeichnet, dass** die elektrische Kontaktierung der Kontaktelemente (16.1, 16.2, 18.1, 18.1', 18.2) in Form einer Steckverbindung erfolgt, wobei das Kontaktelement (18.1, 18.1', 18.2) der zweiten Kontakteinheit (18, 18') eine sich verjüngende Ausnehmung (22.1, 22.1', 22.2) aufweist, in welcher ein sich verjüngender Endbereich (24.1, 24.2) des Kontaktelements (16.1, 16.2) der ersten Kontakteinheit (16) aufnehmbar ist.

4. Kontaktiervorrichtung nach einem der Ansprüche 1 bis 3, **dadurch gekennzeichnet, dass** in der zweiten Kontakteinheit (18') eine der sich verjüngenden Ausnehmung (22.1') in Richtung der Hochachse (26) gegenüberliegende zweite sich verjüngende Ausnehmung (28') zur Aufnahme eines Endbereiches eines Kontaktelementes der zweiten Elektronikeinheit (12) oder einer weiteren Elektronikeinheit vorgesehen ist.

5. Kontaktiervorrichtung nach einem der Ansprüche 1 bis 4, **dadurch gekennzeichnet, dass** die sich in Richtung einer Hochachse (26) erstreckende Tiefe (T, T') der Ausnehmung (22.1, 22.1', 22.2, 28') des Kontaktelements (18.1, 18.1', 18.2) im Wesentlichen der sich in Richtung einer Hochachse (26) erstreckenden Länge (L) des sich verjüngenden Endbereichs (24.1, 24.2) des Kontaktelements (16.1, 16.2) entspricht.

6. Kontaktiervorrichtung nach einem der Ansprüche 1 bis 5, **dadurch gekennzeichnet, dass** die sich verjüngende Ausnehmung (22.1, 22.1', 22.2, 28') eine plane Kontaktgrundfläche (20.1b, 20.1b', 20.2b) und eine sich an die Kontaktgrundfläche (20.1 b, 20.1b', 20.2b) anschließende Kontaktmantelfläche (20.1 a, 20.1 a', 20.2a) aufweist.

7. Kontaktiervorrichtung nach einem der Ansprüche 1 bis 6, **dadurch gekennzeichnet, dass** der sich verjüngende Endbereich (24.1, 24.2) des Kontaktelements (16.1, 16.2) der ersten Kontakteinheit (16) und die sich verjüngende Ausnehmung (22.1, 22.1', 22.2, 28') des Kontaktelements (18.1, 18.1', 18.2) der zweiten Kontakteinheit (18, 18') kegelstumpfförmig ausgeführt sind.

8. Kontaktiervorrichtung nach einem der Ansprüche 1 bis 7, **dadurch gekennzeichnet, dass** das Kontaktelement (16.1, 16.2) der ersten Kontakteinheit (16) als Feder, Stift oder Hülse ausgeführt ist.

9. Kontaktiervorrichtung nach einem der Ansprüche 1 bis 8, **gekennzeichnet durch** eine Ausführung als Druckkontaktsystem.
